# EUROPÄISCHE PATENTANMELDUNG

(11) **EP 1 752 924 A1**
(43) Veröffentlichungstag der Anmeldung: **14.02.2007**
(21) Anmeldenummer: 05016036.5
(22) Anmeldetag: 23.07.2005
(51) Int. Cl.: G06Q 30/00

(54) **Verfahren zum Bestellen eines Produkts bei einem mit einem Kommunikationsnetzwerk verbundenen Online-Shop**

(71) Anmelder: HURRA Communications GmbH, 70599 Stuttgart (DE)
(72) Erfinder: Schweier, René, 70599 Stuttgart (DE)
(74) Vertreter: Dreiss, Fuhlendorf, Steimle & Becker

(57) **Zusammenfassung**

Die Erfindung betrifft ein Verfahren zur Bestellung eines Produkts bei einem mit einem Kommunikationsnetzwerk (4) verbundenen Online-Shop (9), dem eine mindestens einen Werbepartner (5, 6) umfassende, mit dem Kommunikationsnetzwerk (4) verbundene Menge von Werbepartnern (5, 6) zugeordnet ist, wobei
a) mittels eines einem Benutzer (1) zugeordneten Client (2) durch Eingabe eines Schlüsselwortes eine von einem dem Online-Shop (9) zugeordneten Werbepartner (5, 6) bereitgestellte Netzwerkseite über das Kommunikationsnetzwerk (4) angefordert wird;
b) die angeforderte Netzwerkseite an den Client (2) übermittelt wird und dem Benutzer (1) angezeigt wird;
c) der Benutzer (1) einen auf der angezeigten Netzwerkseite in Abhängigkeit von dem eingegebenen Schlüsselwort dargestellten und dem Online-Shop (9) bzw. dem Produkt zugeordneten Link aktiviert;
d) durch Aktivieren des Links automatisch eine dem Online-Shop (9) bzw. dem Produkt zugeordnete Netzwerkseite durch den Client (2) angefordert wird;
e) die angeforderte Netzwerkseite an den Client (2) übermittelt wird und dem Benutzer (1) angezeigt wird; und
f) der Benutzer (1) auf der angezeigten Netzwerkseite das Produkt bestellt oder die Schritte a) bis e) so lange wiederholt werden, bis der Benutzer (1) das Produkt auf der angezeigten Netzwerkseite bestellt. Um das Platzieren von Links auf Netzwerkseiten der Werbepartner (5, 6) dahingehend zu verbessern, dass der Datenverkehr über das Kommunikationsnetzwerk (4) reduziert und die Rechenlast eventuell beteiligter Server verringert wird, wird vorgeschlagen, dass der dem Online-Shop (9) bzw. dem Produkt zugeordnete Link in Abhängigkeit von einem dem Benutzer (1) bzw. dem Client (2) zugeordneten Benutzerprofil auf der angezeigten Netzwerkseite dargestellt wird. (Figur 1)

## Beschreibung

Die Erfindung betrifft ein Verfahren zum Bestellen eines Produkts bei einem mit einem Kommunikationsnetzwerk verbundenen Online-Shop, dem eine mindestens einen Werbepartner umfassende, mit dem Kommunikationsnetzwerk verbundene Menge von Werbepartnern zugeordnet ist, wobei
a) mittels eines einem Benutzer zugeordneten Client durch Eingabe eines Schlüsselwortes eine von einem dem Online-Shop zugeordneten Werbepartner bereitgestellte Netzwerkseite über das Kommunikationsnetzwerk angefordert wird;
b) die angeforderte Netzwerkseite an den Client übermittelt wird und dem Benutzer angezeigt wird;
c) der Benutzer einen auf der angezeigten Netzwerkseite in Abhängigkeit von dem eingegebenen Schlüsselwort dargestellten und dem Online-Shop bzw. dem Produkt zugeordneten Link aktiviert;
d) durch Aktivieren des Links automatisch eine dem Online-Shop bzw. dem Produkt zugeordnete Netzwerkseite durch den Client angefordert wird;
e) die angeforderte Netzwerkseite an den Client übermittelt wird und dem Benutzer angezeigt wird; und
f) der Benutzer auf der angezeigten Netzwerkseite das Produkt bestellt oder die Schritte a) bis e) so lange wiederholt werden, bis der Benutzer das Produkt auf der angezeigten Netzwerkseite bestellt.

Die Erfindung betrifft auch ein Client-Server-System umfassend einen einem Benutzer zugeordneten Client, einen Online-Shop, dem mindestens ein Produkt zugeordnet ist, eine mindestens einen Werbepartner umfassende Menge von dem Online-Shop zugeordneten Werbepartnern, und ein Kommunikationsnetzwerk, mittels dessen eine Kommunikation zwischen dem Client, dem Werbepartner, und dem Online-Shop möglich ist, wobei
- der Client Mittel zur Eingabe eines Schlüsselwortes und damit zum Anfordern einer von einem dem Online-Shop zugeordneten Werbepartner bereitgestellten Netzwerkseite über das Kommunikationsnetzwerk aufweist;
- in dem Client-Server-Netzwerk Mittel zum Übermitteln der angeforderten Netzwerkseite an den Client und in dem Client ein Browser zur Anzeige der Netzwerkseite vorgesehen sind;
- in dem Client-Server-Netzwerk Mittel zum Darstellen eines dem Online-Shop bzw. dem Produkt zugeordneten Links auf der angezeigten Netzwerkseite in Abhängigkeit von dem eingegebenen Schlüsselwort;
- der Client Mittel zum Aktivieren des Links und damit zum automatischen Anfordern einer dem Online-Shop bzw. dem Produkt zugeordneten Netzwerkseite aufweist;
- in dem Client-Server-Netzwerk Mittel zum Übermitteln der angeforderten Netzwerkseite an den Client und in dem Client der Browser zur Anzeige der Netzwerkseite vorgesehen sind; und
- der Client Mittel zum interaktiven Bestellen des Produkts über das Kommunikationsnetzwerk aufweist.

Die Erfindung betrifft ferner einen Server eines Client-Server-Systems, das Client-Server-System umfassend mindestens einen einem Benutzer zugeordneten Client, einen Online-Shop, eine mindestens einen Werbepartner umfassende Menge von dem Online-Shop (9) zugeordneten Werbepartnern und ein Kommunikationsnetzwerk, mit dem der Client, der Werbepartner und der Online-Shop in Verbindung stehen.

Die Erfindung betrifft schließlich auch ein Computerprogramm, das auf einem Client-Server-System, insbesondere auf einem Client und/oder einem Server, ablauffähig ist.

Ein Online-Shop wird von einem Anbieter von Produkten (Waren oder Dienstleistungen) betrieben. Dabei umfasst der Online-Shop typischerweise einen Server in einem Kommunikationsnetzwerk, beispielsweise dem Internet. Dem Online-Shop oder den Produkten sind Netzwerkseiten zugeordnet, die von einem ebenfalls mit dem Kommunikationsnetzwerk verbundenen Client angefordert werden können. Diese Netzwerkseiten werden auch als Web-Pages bezeichnet und enthalten Informationen bezüglich der angebotenen Produkte, beispielsweise Verkaufspreis und technische Details. Ein Benutzer des Online-Shops, also ein potenzieller Kunde, kann ein von dem Online-Shop angebotenes Produkt dadurch kaufen, dass er mittels des Client eine das Produkt beschreibende Netzwerkseite von dem Online-Shop anfordert, das Produkt auswählt und einen Bestellvorgang bezüglich des ausgewählten Produkts einleitet. Ein solches Verfahren ist an sich aus dem Stand der Technik bekannt und befindet sich bereits im praktischen Einsatz.

Unter einem Online-Shop soll insbesondere auch ein Anbieter von Informationen verstanden werden. In diesem Fall sind die Informationen die Produkte des Online-Shops. Die Bestellung eines Produkts kann also auch die Anforderung von Informationen sein. Derartige Informationen sind beispielsweise Nachrichten, Börsenberichte, Bilder und Musikdateien.

Auch der Zugang zu Informationen an sich kann als Produkt eines Online-Shops angesehen werden. Beispielsweise kann von dem Online-Shop ein Zugang zu einem geschützten Bereich angeboten werden. Ein Benutzer bestellt dieses Produkt beispielsweise dadurch, dass er sich bei dem Online-Shop registriert und dadurch Zugang zu dem geschützten Bereich erhält. Der geschützte Bereich kann Informationen beinhalten, die nur den registrierten Benutzern zur Verfügung stehen. Die Bestellung eines Produkts geht damit in dem hier verwendeten Bedeutungsinhalt über das hinaus, was üblicherweise beispielsweise unter dem Kauf eines Produkts verstanden wird. Insbesondere ist die Bestellung eines Produkts nicht notwendigerweise an die Bezahlung eines Kaufpreises gebunden.

Die von dem Online-Shop an den Client übermittelbaren Netzwerkseiten sind üblicherweise in einem dem Online-Shop zugeordneten Speicherbereich abgespeichert oder werden dynamisch in Abhängigkeit der Anforderung durch den Benutzer erzeugt. Die dafür erforderlichen Daten sind üblicherweise in einem mit dem Kommunikationsnetzwerk in Verbindung stehend Server, auf den der Online-Shop Zugriff hat bzw. der Teil des Online-Shops ist, abgelegt.

Bei einem Bestellvorgang werden benutzerspezifische Daten von dem Client an einen Server des Online-Shops übermittelt, die beispielsweise eine Adresse und eine Bankverbindung des Benutzers beschreiben. Mittels dieser Daten veranlasst der Online-Shop den Anbieter der Produkte die bestellten Produkte an den Benutzer zu versenden und den entsprechenden Kaufpreis von einem Bankkonto des Benutzers abzubuchen.

Zur Beschreibung des Inhalts einer Netzwerkseite wird eine sogenannte Seitenbeschreibungssprache verwendet. Heutzutage wird dazu überwiegend die standardisierte Seitenbeschreibungssprache HTML (Hypertext Mark up Language) eingesetzt. HTML erlaubt es, den Inhalt und das Aussehen einer Netzwerkseite in Form eines sogenannten HTML-Dokuments zu beschreiben. Stellt beispielsweise der Benutzer mittels des Client eine Anfrage an den Online-Shop, so übermittelt der Online-Shop ein die angeforderten Informationen, also beispielsweise Beschreibungen, Verkaufspreis und eine Ansicht eines Produkts, enthaltendes HTML-Dokument an den Client. Sollen die dem Client mittels des HTML-Dokuments übermittelten Informationen einem Benutzer dargestellt werden, so wird die Netzwerkseite beziehungsweise das HTML-Dokument einem sogenannten Browser zugeführt. Als Browser bezeichnet man ein Computerprogramm, das in der Lage ist, HTML-Dokumente zu interpretieren und mittels einer geeigneten grafischen Oberfläche auf einem Datensichtgerät, beispielsweise einem Computerdisplay, darzustellen.

Um potentielle Kunden auf den Online-Shop oder auf von dem Online-Shop angebotene Produkte aufmerksam zu machen, sind dem Online-Shop sogenannte Werbepartner zugeordnet. Ein Werbepartner ist der Betreiber eines Servers, der Netzwerkseiten zur Verfügung stellt, auf denen ein sogenannter Link zu einer Netzwerkseite des Online-Shops bzw. des Produkts dargestellt ist. Im folgenden wird dieser Server selbst als Werbepartner bezeichnet. Ein derartiger Link kann durch den Benutzer aktiviert werden, bspw. durch Anklicken mit einer Computermaus. Dies bewirkt, dass der dem Benutzer zugeordnete Client automatisch veranlasst wird, von dem Online-Shop eine Netzwerkseite anzufordern. Die so angeforderte Netzwerkseite kann beispielsweise die Hauptseite, die sogenannte Home-Page, des Online-Shops oder eine von dem Online-Shop bereitgestellte oder dynamisch erzeugte Netzwerkseite sein, die beispielsweise eine Beschreibung eines Produkts aufweist.

Ein derartiger Link wird häufig mittels eines sogenannten Werbebanners auf der Netzwerkseite des Werbepartners dargestellt. Aktiviert der Benutzer dieses Werbebanner, so wird durch den dem Benutzer zugeordneten Client eine Netzwerkseite des Online-Shops angefordert.

Es ist denkbar, dass der Werbepartner als eine sogenannte Suchmaschine ausgebildet ist. Eine Suchmaschine ist ein mit dem Kommunikationsnetzwerk verbundener Server, an den der Benutzer mittels des Client eine Anfrage in Form eines Suchbegriffes sendet. Die Suchmaschine ermittelt anhand vorgebbarer Regeln in Abhängigkeit von dem übermittelten Suchbegriff Informationen, die mit dem Suchbegriff assoziiert werden. Die Suchmaschine veranlasst, dass die so ermittelten Informationen (das Suchergebnis) mittels einer Netzwerkseite an den Client übermittelt werden. Dazu wird häufig in Abhängigkeit von den ermittelten Informationen automatisiert ein HTML-Dokument durch den Server erzeugt, das schließlich an den Client übermittelt und dem Benutzer mittels des Browsers angezeigt wird. Häufig werden auf den von den Suchmaschinen in Abhängigkeit einer Anforderung von Informationen erzeugten Netzwerkseiten auch Werbebanner dargestellt, wobei die Werbebanner ihrerseits wiederum von Servern spezieller Dienstleister über das Kommunikationsnetzwerk zur Verfügung gestellt werden können. Es ist bekannt, dass die Darstellung der Links bzw. Werbebanner auf der Netzwerkseite des Werbepartners in Abhängigkeit von dem eingegebenen Schlüsselwort bzw. Suchwort erfolgt.

Kauft der Benutzer bei dem Online-Shop ein Produkt, so erhält der Werbepartner in der Regel eine Vergütung, da der Benutzer durch den Werbepartner auf den Online-Shop aufmerksam gemacht wurde. Die Höhe der Vergütung kann beispielsweise prozentual vom Gewinn oder vom Kaufpreis des Produkts abhängen. Die Vergütung kann aber auch einem festen Geldbetrag entsprechen. Üblicherweise hängt die Höhe der Vergütung aber von der Anzahl der mit einem bestimmten Schlüsselwort erzielten Clicks (Aktivierungen des Links), Leads (Anzahl der Aktionen, die von dem Benutzer auf der Netzwerkseite des Online-Shops ausgelöst werden, z.B. Anbahnung einer Bestellung, Registrierung, Adressgenerierung, etc.) und/oder Sales (Anzahl der Produktbestellungen) ab. Entsprechende Beschreibungen sind im Internet unter https://adwords.google.de/support/bin/answer.py ?answer=6111&topic=115 sowie unter http://www.content.overture .com/d/DEm/ays/dedeindex.jhtml veröffentlicht.

Zur Realisierung der Vergütung der Werbepartner wird üblicherweise ein sogenanntes Cookie eingesetzt. Fordert der Benutzer mittels des Client von dem Werbepartner eine Netzwerkseite an, so veranlasst der Werbepartner, dass neben der Netzwerkseite zusätzliche Informationen an den Client übermittelt werden und diese Informationen in einem dem Client zugeordneten Speicherbereich abgespeichert werden. Die so abgespeicherten Informationen werden als Cookie bezeichnet. Man spricht hier auch vom "Setzen eines Cookies". Ein Cookie kann auch gesetzt werden, wenn der Client einen auf einer Netzwerkseite dargestellten Link aktiviert. Fordert der Client erneut eine Netzwerkseite von dem Werbepartner an, so kann das Cookie zusammen mit der Anforderung von dem Client an den Werbepartner übermittelt werden. Ein Cookie ist üblicherweise derart realisiert, dass es nur an den Werbepartner zurückgeschickt werden kann, der den Client zum Setzen des Cookies veranlasst hat.

Um mittels eines Cookies bei einer durchgeführten Bestellung eines Produkts zu ermitteln, ob der Benutzer über einen Werbepartner des Online-Shops zu diesem geführt wurde, veranlasst der Online-Shop den Client, an den dem Online-Shop zugeordneten Werbepartner das von diesem Werbepartner gesetzte Cookie zu senden. Erhält der Werbepartner daraufhin das Cookie von dem Client, so sendet der Werbepartner eine Nachricht (sogenannte Vergütungsforderung) an den Online-Shop, der daraufhin eine Vergütung veranlasst. Erhält der Werbepartner kein Cookie von dem Client, dann übermittelt er auch keine Nachricht an den Online-Shop um eine Vergütung zu erhalten. Ein Cookie wird insbesondere dann nicht an den Werbepartner übermittelt, wenn mindestens eine der beiden Bedingungen erfüllt ist:
- Der Benutzer hat bei dem Online-Shop kein Produkt gekauft und somit fordert der Online-Shop den dem Benutzer zugeordneten Client nicht zur Übersendung des Cookie an den Werbepartner auf.
- Der Benutzer wurde nicht über den Werbepartner zu dem Online-Shop geführt und weist deshalb kein von dem Werbepartner gesetztes Cookie auf.

Typischerweise sind einem Online-Shop mehrere Werbepartner zugeordnet. Somit muss bei einer durchgeführten Bestellung eines Produkts bei dem Online-Shop derjenige Werbepartner ermittelt werden, über dessen Link der Benutzer zu dem Online-Shop geführt wurde.

Um in diesem Fall bei einer durchgeführten Bestellung eines Produkts durch den Benutzer bei dem Online-Shop den Werbepartner zu ermitteln, über dessen Link der Benutzer zu dem Online-Shop geführt wurde, setzt wieder derjenige Werbepartner bei dem Client ein Cookie, über dessen Netzwerkseite durch Aktivierung des dort dargestellten Links der Benutzer zu dem Online-Shop geführt wird. Bestellt der Benutzer daraufhin - oder wie oben dargestellt, zu einem späteren Zeitpunkt innerhalb der Laufzeit des Cookies - bei dem Online-Shop ein Produkt, so veranlasst der Online-Shop den Client, das von dem Werbepartner, über dessen Link der Benutzer zu dem Online-Shop geführt wurde, gesetzte Cookie, an diesen Werbepartner zu übermitteln. Der Werbepartner, der dieses Cookie erhält, sendet sodann eine Mitteilung an den Online-Shop, der so den Werbepartner identifizieren und diesem eine Vergütung zukommen lassen kann.

Es ist heutzutage üblich, dass einer oder mehrere der dem Online-Shop zugeordneten Werbepartner einem sogenannten Tracking-System zugeordnet ist. Ein derartiges Tracking-System ist beispielsweise unter http://www.zanox.de oder unter http://www.affilinet.de erreichbar. Ein Tracking-System ermöglicht es einem Online-Shop einerseits, einen oder mehrere der dem Tracking-System zugeordneten Werbepartner auszuwählen. Andererseits kann ein Online-Shop dort Links und/oder Werbebanner hinterlegen, die dann von potentiellen, bei dem Tracking-System registrierten Werbepartnern auf deren Netzwerkseiten dargestellt werden können. Ein Tracking-System verwaltet damit beispielsweise die Werbepartner eines Online-Shops. Der Online-Shop selbst muss in diesem Fall nicht notwendigerweise Informationen über die Identität der Werbepartner selbst besitzen. Zweckmäßigerweise wird das Tracking-System den Online-Shop jedoch regelmäßig über die aktuell dem Online-Shop zugeordneten Werbepartner informieren.

Ist einer oder mehrere der dem Online-Shop zugeordneten Werbepartner einem Tracking-System zugeordnet, so veranlasst der Online-Shop im Falle einer Bestellung eines Produkts durch einen Benutzer den Client, alle dort abgelegten Cookies, die von einem dem Tracking-System zugeordneten Werbepartner bei dem Client gesetzt wurden, an den jeweiligen Werbepartner zu übermitteln. Die Werbepartner wiederum, die eine Kopie des bei dem Client gesetzten Cookies von diesem erhalten, senden eine Nachricht an das Tracking-System. Das Tracking-System wertet diese Nachrichten aus und sendet eine gebündelte Vergütungsforderung an den Online-Shop. Dabei besteht das Problem unerwünschter Mehrfachvergütungen.

Das Tracking-System verwaltet die Werbepartner eines Online-Shops und koordiniert die Werbeausgabe des Online-Shops, bspw. für das Buchen von Schlüsselworten bei Werbepartnern bzw. Suchworten bei Suchmaschinen und die Darstellung von Links bzw. Werbebannern auf den Netzwerkseiten der Werbepartner. Die Links bzw. die dem Inhalt der Links entsprechenden Informationen sind üblicherweise auf einem Server abgespeichert, der mit dem Kommunikationsnetzwerk in Verbindung steht. Bei Bedarf müssen die entsprechenden Informationen von dort über das Kommunikationsnetzwerk zu dem Werbepartner und zusammen mit der übrigen Netzwerkseite weiter zu dem Client oder aber von dort direkt zu dem Client übertragen werden, was zu einem erheblichen Datenverkehr über das Netzwerk führt. Die Tatsache, dass die Nutzung des Internet und der Aufruf der Netzwerkseiten für den Benutzer in der Regel kostenlos ist, führt dazu, dass nahezu alle Anbieter von Netzwerkseiten versuchen, durch auf ihren Netzwerkseiten dargestellte Links Einnahmen zu erzielen. Dies wiederum verdeutlicht die enormen Übertragungskapazitäten und Rechenressourcen, die durch die Übermittlung der Links über das Kommunikationssystem beansprucht werden.

Ausgehend von diesem Stand der Technik liegt der vorliegenden Erfindung die Aufgabe zugrunde, das Platzieren von Links auf Netzwerkseiten von Werbepartnern dahingehend zu verbessern, dass der Netzverkehr über das Kommunikationsnetzwerk reduziert und die Rechenlast eventuell beteiligter Server verringert wird.

Die Aufgabe wird bei einem Verfahren der eingangs genannten Art mit den Verfahrensschritten a) bis f) dadurch gelöst, dass der dem Online-Shop bzw. dem Produkt zugeordnete Link in Abhängigkeit von einem dem Benutzer bzw. dem Client zugeordneten Benutzerprofil auf der angezeigten Netzwerkseite dargestellt wird.

Erfindungsgemäß wird also auf abgespeicherte Benutzerprofile zugegriffen, um die auf den dem Werbepartner zugeordneten, von dem Client angeforderten Netzwerkseiten dargestellten Links möglichst gut auf den Benutzer des Client abzustimmen. Möglichst gut bedeutet in diesem Zusammenhang, dass der Link bzw. dessen Inhalt den Benutzer ansprechen sollte, ihn animieren sollte, den Link zu aktivieren, und letzten Endes zu einer Bestellung des Produkts durch den Benutzer führen. Über die Güte des Links entscheidet also letztlich die Effizienz des Links hinsichtlich Clicks, Leads, Sales. Dadurch, dass die Übermittlung und Darstellung der Links auf den angeforderten Netzwerkseiten auf die guten und effizienten Links reduziert wird, kann es zu einer deutlichen Verringerung der über das Kommunikationsnetzwerk zu übertragenden und in den Rechnern des Netzwerks zu verarbeitenden Daten kommen. Insgesamt bietet die Erfindung eine deutliche Verbesserung hinsichtlich der Ausnutzung vorhandener Übertragungsressourcen und Rechenressourcen in einem Client-Server-Netzwerk. Außerdem können die bei einem Online-Shop zur Verfügung stehenden finanziellen Mittel für Werbung effektiver eingesetzt werden (Optimierung des ROI, Return of Invest).

Das Benutzerprofil des Benutzers umfasst vorzugsweise eine oder mehrere der nachfolgenden Angaben umfasst: Geschlecht, Alter, Geburtsort, Wohnort, Familienstand, Anzahl der Kinder, Ausbildung, Beruf, Einkommen, Hobbys, und Neigungen. Selbstverständlich ist das Benutzerprofil nicht auf diese beispielhaft genannten Einträge beschränkt, sondern kann beliebig erweitert und verfeinert werden.

Die Benutzerprofile werden vorab auf einem Server, der mit dem Kommunikationsnetzwerk in Verbindung steht, abgespeichert. Vorzugsweise sind auf dem Server eine Vielzahl von Benutzerprofilen und diesen zugeordnete Links abgelegt, aus denen in Abhängigkeit von dem Benutzerprofil des Benutzers bzw. des Clients ein Link ausgewählt wird und auf der angezeigten Netzwerkseite dargestellt wird. Es wird also die Identität des Benutzers ermittelt, das entsprechende bereits abgespeicherte Benutzerprofil ausgewählt und in Abhängigkeit von dem Profil ein geeigneter Link ausgewählt. Zusätzlich wird auch das von dem Benutzer eingegebene Schlüsselwort berücksichtigt. So ist es bspw. denkbar, dass beim Suchwort "Auto" einem 20 jährigen alleinstehenden Benutzer ein Link zu einem Zweisitzer oder Sportwagen und einem 50 jährigen Benutzer mit Familie ein Link zu einem familientauglichen Fahrzeug angezeigt wird. Je nach Einkommen oder verfügbarem Vermögen wird den Benutzern ein Link zu einem preiswerten oder eher hochpreisigen Autos angezeigt. Der Server kann Teil des Werbepartners sein, so dass die Auswahl eines geeigneten Links in Abhängigkeit von dem Benutzerprofil durch den Werbepartner erfolgen kann. Alternativ sind der Werbepartner und der Server separat ausgebildet und stehen lediglich über das Kommunikationsnetzwerk miteinander in Verbindung. In diesem Fall übermittelt der Werbepartner lediglich eine eindeutige Kennung an den Server, der dann selbsttätig nach dem entsprechenden Benutzerprofil sucht.

Der Server übermittelt dann das gefundene Benutzerprofil an den Werbepartner der den geeigneten Link auswählt. Ebenso ist es denkbar, dass der Server auch Zugriff auf eine Menge vorhandener Links hat und selbsttätig in Abhängigkeit von dem Benutzerprofil einen geeigneten Link auswählt und diesen dann an den Werbepartner übermittelt.

Falls für einen bestimmten Benutzer vorab kein entsprechendes Benutzerprofil erstellt und abgespeichert wurde, wäre es denkbar, dass auf Standardprofile zugegriffen wird oder dass auf die Schnelle ein Hilfsprofil erstellt wird. Dieses kann eine geringere Anzahl an Einträgen als ein vollständiges Benutzerprofil umfassen. Denkbar ist, dass das Hilfsprofil bspw. den Aufenthaltsort des Benutzers (dieser kann über den Einwahlpunkt ins Internet ermittelt werden), die Jahreszeit, den Monat, Art des Tages (Feiertag oder Werktag), die Tageszeit, die Uhrzeit, das Wetter am Ort des Benutzers und andere schnell erfassbare Einträge von Benutzerprofilen umfassen. Selbstverständlich kann auch ein reguläres Benutzerprofil diese Einträge umfassen und sogar auf diese Einträge beschränkt sein. Mittels eines ad-hoc erstellten Hilfsprofils kann also ebenfalls ein geeigneter Link ausgewählt und dem Benutzer angezeigt werden.

Die Benutzerprofile können entweder automatisch aufgezeichnet und bei Bedarf aktualisiert oder von dem Benutzer manuell eingegeben und geändert werden. Beim automatischen Aufzeichnen des Benutzerprofils kann bspw. das Surfverhalten des Benutzers im Internet analysiert werden, insbesondere nach welchen Suchworten er in Suchmaschinen sucht, welche Netzwerkseiten er aufruft und welche Tätigkeiten er im Internet ausführt (Online-Shopping, Online-Banking, Informationssammlung, etc.). Ebenso ist es denkbar, ein Benutzerprofil durch Auswerten der Favoriten-Liste in einem Internet-Browser auf dem Client des Benutzers zu ermitteln. Es könnte vorgesehen werden, dass die Favoriten-Listen sämtlicher Benutzer eines Browsers nicht mehr dezentral auf den Clients, sondern zentral auf einem oder mehreren Servern des Kommunikationsnetzwerks abgespeichert werden. Auf diese Favoriten-Listen könnte dann zum Zwecke der automatischen Erstellung von Benutzerprofilen zugegriffen werden.

Es wird des weiteren vorgeschlagen, dass der Server, auf dem die Benutzerprofile abgespeichert sind, Teil eines eMail-Dienstes oder eines sonstigen Dienstes (Community) mit Nutzerprofilen ist, wobei der Werbepartner über das Kommunikationssystem Zugriff auf den Server hat. Schon jetzt werden Benutzer von einigen kostenlosen eMail-Diensten (z.B. Web.de, GMX.de, etc.) aufgefordert einen mehrseitigen Fragebogen auszufüllen, bevor die gewünschte eMail-Adresse vergeben wird. Die Informationen aus dem Fragebogen werden als Nutzerprofile in dem Server abgespeichert und von dem Betreiber des eMail-Dienstes für Marketingaktionen benutzt. Die Informationen könnten im Rahmen der vorliegenden Erfindung zusätzlich auch zur automatischen Erstellung von Benutzerprofilen und zur Auswahl und Darstellung von auf den Benutzer abgestimmten Links genutzt werden.

Gemäß einer bevorzugten Ausführungsform wird vorgeschlagen, dass mindestens ein Tracking-System mindestens einem der Werbepartner zugeordnet und mit dem Kommunikationsnetzwerk verbunden ist, wobei das Tracking-System über einen vorgebbaren Zeitraum hinweg die ausgewählten Links vergleicht mit der Anzahl der Aktivierungen des Links und/oder mit der Anzahl der bei dem Online-Shop bestellten Produkte. In diesem Fall kann das Kaufverhalten des Benutzers analysiert werden und können entsprechende Einträge in das Benutzerprofil einfließen. Diese umfassen bspw. Angaben über die Häufigkeit von Bestellungen in Online-Shops, die Preisregion der bestellten Produkte, Art der bestellten Produkte (Luxusgüter, Gebrauchsartikel, Lebensmittel, etc.), die Jahreszeit, den Monat, Art des Tages (Feiertag oder Werktag), die Tageszeit, die Uhrzeit, und das Wetter am Ort des Benutzers zum Zeitpunkt der Bestellung.

Vorteilhafterweise führt das Tracking-System in Abhängigkeit von dem Ergebnis des Vergleichs der ausgewählten Links mit der Anzahl der Aktivierungen des Links und/oder mit der Anzahl der bei dem Online-Shop bestellten Produkte eine Optimierung der Links hin zu einer höheren Effektivität der Links aus. Auf diese Weise kann die Erfindung weiter verbessert werden, indem die Platzierung der Links, d.h. das Buchen von bestimmten Suchworten bei den Werbepartnern, noch effektiver gestaltet wird. Dadurch kann die auf dem Kommunikationsnetzwerk vorhandene Übertragungskapazität sowie die Rechenkapazität der Rechner des Client-Server-Netzwerks nochmals besser genutzt werden. Im Rahmen der Optimierung der Links wird vorzugsweise die Zuordnung der Links zu den Schlüsselworten, zu den Benutzerprofilen und/oder zu den Werbepartnern geändert.

Gemäß einer bevorzugten Ausführungsform wird bei der Aktivierung des Links automatisch mindestens eine erste Information bezüglich der Aktivierung des Links von dem Client an das Tracking-System übermittelt, und veranlasst der Online-Shop bei der Bestellung des Produkts den Client automatisch, eine weitere Information bezüglich der Bestellung an das Tracking-System zu übermitteln. Die erste Informationen kann in Form eines Cookies in dem Client abgelegt sein und bspw. das in eine Suchmaschine eingegebene Suchwort umfassen. Die zweite Information kann ebenfalls in Form eines Cookies in dem Client abgelegt sein und bspw. Art, Preis, Kategorie des bestellten Produkts umfassen. Bei erfolgter Bestellung veranlasst das Tracking-System den Client den Inhalt der Cookies an das Tracking-System zu übermitteln. Die Cookies werden in einem dem Client zugeordneten Speicherbereich abgelegt.

Statt eines Cookies können auch Informationen über die Aktivierung des Links einerseits und über die erfolgte Bestellung andererseits auf einem mit dem Kommunikationssystem verbunden Server abgelegt werden. Die von dem Client bezüglich der Aktivierung des Links an den Server übermittelte Information enthält vorteilhafterweise ein Datum, eine Uhrzeit, eine Identifikation des Client, eine Identifikation des Benutzers, eine Identifikation des Werbepartners und/oder eine Identifikation eines dem Werbepartner zugeordneten Tracking-Systems. Die Information bezüglich des bestellten Produkts kann eine Angabe bezüglich einer Produktbezeichnung, des Verkaufspreises, einer zugeordneten Warengruppe und/oder eines erzielten Gewinns umfassen. Derartige Informationen können beispielsweise in einer Datenbank des Server abgelegt werden.

Gemäß einer vorteilhaften Weiterbildung der Erfindung ist dem Werbepartner eine Suchmaschine zugeordnet, wobei der Benutzer das Schlüsselwort in Form eines Suchwortes für die Suchmaschine eingibt, die Suchmaschine in dem Kommunikationsnetzwerk nach Netzwerkseiten sucht, welche das Suchwort enthalten oder betreffen, und dem Benutzer die angeforderte Netzwerkseite mit einer Liste mit gefundenen Netzwerkseiten bzw. mit entsprechenden Verknüpfungen auf die gefundenen Netzwerkseiten angezeigt wird, auf der auch der Link dargestellt wird.

Die oben genannte Aufgabe wird auch durch ein Client-Server-System der eingangsgenannten Art dadurch gelöst, dass in dem Client-Server-System Mittel zur Auswahl des dem Online-Shop bzw. dem Produkt zugeordneten Links in Abhängigkeit von einem dem Benutzer bzw. dem Client zugeordneten Benutzerprofil und zur Darstellung des ausgewählten Links auf der angezeigten Netzwerkseite aufweist.

Vorteilhafterweise weist das Client-Server-System Mittel zur Durchführung des erfindungsgemäßen Verfahrens auf.

Die Aufgabe wird ferner auch durch einen Server der eingangs genannten Art dadurch gelöst, wobei der Server Mittel zur Durchführung des erfindungsgemäßen Verfahrens aufweist.

Ein derartiger Server kann beispielsweise ein Computer sein, der mit dem Kommunikationsnetzwerk (z.B. dem Internet) verbunden ist und über das Internet Informationen mit dem Client, dem Online-Shop, mindestens einem Tracking-System und mindestens einem Werbepartner austauschen kann. Auf dem Server sind die Benutzerprofile einer Vielzahl von Benutzern abgelegt. Diese wurden vorab manuell eingegeben oder automatisch erstellt. Zudem umfasst der Server eine Logik, um für den aktuellen Benutzer das entsprechende Benutzerprofil aus den vorhandenen Profilen auszuwählen, bzw. falls kein Benutzerprofil für den Benutzer abgespeichert ist, ein neues Profil manuell oder automatisch zu erstellen, aus einer Vielzahl von Links in Abhängigkeit von dem Benutzerprofil einen geeigneten Link auszuwählen und diesen auf der angeforderten Netzwerkseite darstellen zu lassen. Ist beispielsweise der Online-Shop als eigenständiger Computer ausgebildet, so ist es auch denkbar, dass der erfindungsgemäße Server als Software auf demselben Computer abläuft, der als Online-Shop mit dem Internet angeschlossen ist. Ein Austausch von Informationen zwischen dem Server und dem Online-Shop würde dann auf bekannte Weise beispielsweise durch von dem Betriebssystem des Computers zur Verfügung gestellte Funktionalitäten realisiert werden.

Von besonderer Bedeutung ist die Realisierung dieser Erfindung in Form eines Computerprogramms. Dabei ist das Computerprogramm auf mindestens einem Rechengerät bzw. einem Computer, insbesondere auf einem Mikroprozessor ablauffähig und zur Ausführung des erfindungsgemäßen Verfahrens geeignet. Insbesondere können zur Ausführung des erfindungsgemäßen Verfahrens Teile des Computerprogramms auf unterschiedlichen Rechengeräten ablaufen. Die Erfindung wird also durch das Computerprogramm realisiert, so dass dieses Computerprogramm in gleicher Weise die Erfindung darstellt wie das Verfahren, zu dessen Ausführung das Computerprogramm geeignet ist.

Das Computerprogramm ist vorzugsweise auf einem Speicherelement abgespeichert. Ein Speicherelement kann insbesondere ein Random-Access-Memory, ein Read-Only-Memory oder ein Flash-Memory sein. Das Speicherelement kann auch als als Diskette, Compact Disk (CD), Digital Versatile Disk (DVD), und/oder mindestens ein mindestens einer Komponente des Client-Server-Systems zugeordneter Speicherbereich ausgebildet sein.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung. In der Zeichnung zeigen:
- Figur 1: ein erfindungsgemäßes Client-Server-System; und
- Figur 2: ein Ablaufdiagramm eines erfindungsgemäßen Verfahrens.

Eine Vielzahl von Clients und Servern kommuniziert mittels des Internets. Diese bilden in ihrer Gesamtheit ein multimediales Informationssystem, das sogenannte WWW (World Wide Web). Innerhalb des WWW zur Verfügung gestellte Netzwerkseiten sind mittels einer URL (Uniform Ressource Locator) adressierbar. Eine URL ist unter anderem aus dem Namen des die Netzwerkseite zur Verfügung stellenden Servers, einem (zumindest virtuellen) Verzeichnis und einem der Netzwerkseite, beispielsweise dem HTML-Dokument, zugeordneten Namen zusammengesetzt. Eine URL erlaubt es, die dieser URL zugeordnete Netzwerkseite von einem Client aus anzuwählen. Dazu gibt ein Benutzer beispielsweise mittels einer Tastatur die URL in einem speziellen Eingabefeld des Browsers ein. Der Client generiert daraufhin eine Anfrage an den entsprechenden Server, der wiederum die angeforderte Netzwerkseite an den Client übermittelt. Dort wird die übermittelte Netzwerkseite dann beispielsweise mittels eines speziellen Computerprogramms, eines sogenannten Browsers darstellt. Als Browser bezeichnet man ein Computerprogramm, das in der Lage ist, HTML-Dokumente zu interpretieren und mittels einer geeigneten grafischen Oberfläche auf einem Display darzustellen.

Eine URL kann statt eine Netzwerkseite auch einem ausführbaren Computerprogramm auf dem Server zugeordnet sein. Ein derartiges Computerprogramm ist beispielsweise ein sogenanntes perl-script. Ein perl-script ist eine in der Programmiersprache perl codierte Abfolge von Anweisungen. Ruft ein Client eine URL auf, die einem derartigen Computerprogramm zugeordnet ist, so wird dieses Computerprogramm auf dem Server ausgeführt. Die Ausführung des Computerprogramms kann auch eine Übermittlung von Informationen an den Client, beispielsweise in der Form einer Netzwerkseite, vorsehen. Selbstverständlich kann das Computerprogramm auch in einer anderen Sprache, insbesondere in einer anderen Script-Sprache, beispielsweise als java-script, realisiert sein.

In einem HTML-Dokument ist es möglich, URLs weiterer Netzwerkseiten beziehungsweise HTML-Dokumente anzugeben. Derartige URLs werden als Verweis oder als Link bezeichnet. Werden Links mittels eines Browsers einem Benutzer dargestellt, so hat der Benutzer die Möglichkeit, einen dargestellten Link anzuwählen und sich die der angewählten URL entsprechende Netzwerkseite anzeigen zu lassen. Selbstverständlich kann sich die angewählte Netzwerkseite auf einem anderen Server befinden.

Häufig wird von einem ersten Server, beispielsweise von einem Online-Shop, ein zweiter Server, beispielsweise ein Werbepartner beauftragt, auf Netzwerkseiten, die von dem Werbepartner an einen diese Netzwerkseite anfordernden Client übermittelt werden, einen Link auf eine Netzwerkseite des Online-Shop darzustellen. Ein solcher Link kann beispielsweise ein sogenanntes Werbebanner sein, der mittels einer textuellen und/oder grafischen Darstellung für ein über den Online-Shop zu beziehendes Produkt oder eine über den Online-Shop vermittelte Dienstleistung wirbt. Ist der Werbepartner als Suchmaschine ausgestaltet, so kann der Online-Shop den Werbepartner beauftragen, auf einer in Abhängigkeit eines von einem Benutzer eingegebenen Suchwortes erzeugten Netzwerkseite, einen Link auf eine dem Online-Shop zugeordnete Netzwerkseite darzustellen. Typischerweise beauftragt ein Online-Shop mehrere Werbepartner damit, Links auf deren Netzwerkseiten darzustellen. Der Inhalt des Links kann in Abhängigkeit von dem eingegebenen Suchwort aus einer Vielzahl vorhandener Links ausgewählt und dargestellt werden. Erfindungsgemäß wird vorgeschlagen, dass der Link zusätzlich in Abhängigkeit von einem Benutzerprofil des die Netzwerkseite anfordernden Benutzers ausgewählt und dargestellt wird. Dadurch werden nur die für den Benutzer relevanten Links über das Internet übertragen und auf der Netzwerkseite dargestellt, was zu einer deutlich besseren Ausnutzung vorhandener Übertragungskapazitäten und Rechenressourcen in dem Client-Server-System führt.

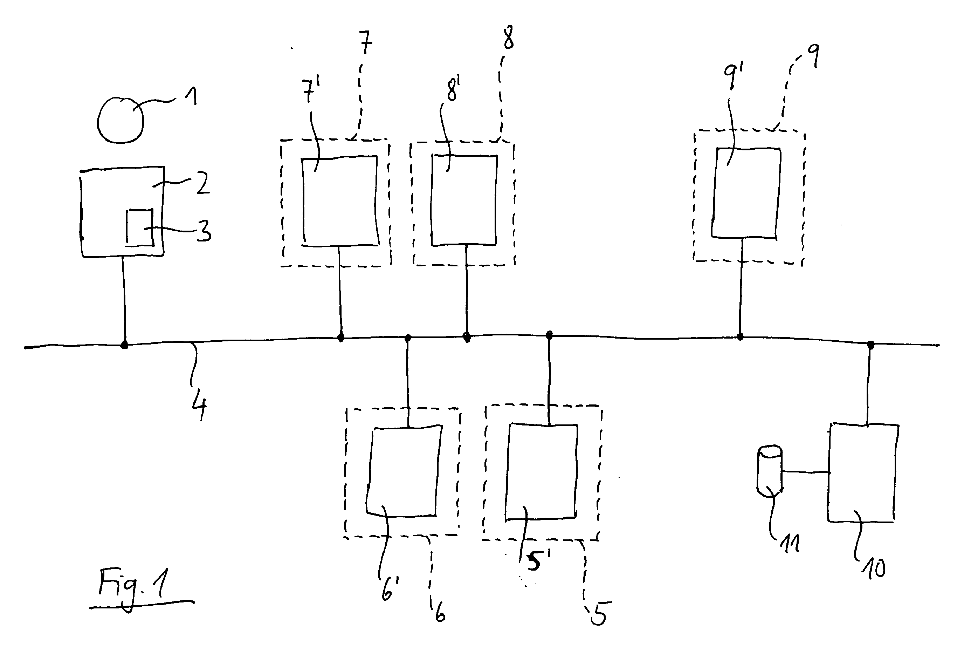

In Figur 1 ist schematisch ein Client-Server-System dargestellt, das zur Durchführung des erfindungsgemäßen Verfahrens geeignet ist. Ein einem Benutzer 1 zugeordneter Client 2 weist einen Speicherbereich 3 auf und ist mit einem Kommunikationsnetzwerk, beispielsweise dem Internet 4 verbunden. Der Client 2 ist beispielsweise als Desktop Computer oder als Laptop ausgestaltet. Der Client 2 kann auch als sogenannter Pocket-Computer (PC) oder als Mobilfunk-Telefon ausgestaltet sein. Der Client 2 weist in Figur 1 nicht dargestellte Mittel auf, die es dem Benutzer 1 ermöglichen, mit dem Client 2 zu interagieren. Derartige Mittel sind beispielsweise eine Tastatur, ein Display, ein zeigegerät (beispielsweise eine sogenannte Computermaus), ein Mikrofon und ein Lautsprecher.

Das Client-Server-System weist ferner mehrere Werbepartner 5, 6 auf, die jeweils mindestens einen Server 5', 6' umfassen, der mit dem Internet 4 verbunden sind. Dabei können die Werbepartner 5, 6 beispielsweise als Suchmaschinen ausgestaltet sein. Die Werbepartner 5, 6 können auch sogenannte Informationsserver sein, die allgemeine Informationen, beispielsweise Nachrichten, oder themenbezogene Informationen, beispielsweise zu medizinischen Themen, zur Verfügung stellen.

In Figur 1 sind ferner Tracking-Systeme 7, 8 mit Servern 7', 8', ein Online-Shop 9 mit Server 9', sowie ein Server 10 dargestellt, wobei die Server 7', 8', 9', 10 ebenfalls mit dem Internet 4 verbunden sind. Dem Server 10 ist ein Speicherbereich zugeordnet, der beispielsweise als Datenbank 11 ausgebildet ist.

Bei dem in Figur 1 dargestellten Client-Server-System sind die Werbepartner 5 dem Tracking-System 7 und die Werbepartner 6 dem Tracking-System 8 zugeordnet. Selbstverständlich ist dies nur ein Beispiel für eine mögliche Ausgestaltung des Client-Server-Systems. Die Erfindung betrifft eine beliebige Anzahl von einem Online-Shop 9 zugeordneten Werbepartnern 5, 6, die selbst wiederum in beliebigen Konstellationen einer beliebigen Anzahl von Tracking-Systemen 7, 8 zugeordnet sind. Dabei ist es auch möglich, dass einzelne Werbepartner 5, 6 keinem Tracking-System zugeordnet sind.

Auf dem Client 2 laufen mehrere Computerprogramme ab, die es dem Client 2 ermöglichen, mit anderen Komponenten des Client-Server-Systems, also den Werbepartnern 5, 6 , den Tracking-Systemen 7, 8, dem Online-Shop 9 und dem Server 10, Daten auszutauschen. Eines dieser Programme ist beispielsweise ein Browser, mittels dessen von dem Benutzer 1 über den Client 2 angeforderte Netzwerkseiten dem Benutzer 1 angezeigt werden. Beispielsweise kann der Benutzer 1 mittels des Client 2 von dem Werbepartner 5, 6 Informationen anfordern. Der Werbepartner 5, 6 übermittelt die angeforderten Informationen in Form einer Netzwerkseite. Diese ist beispielsweise in der Seitenbeschreibungssprache HTML codiert. Empfängt der Client 2 die Netzwerkseite, so wird diese von dem Browser aufbereitet und mittels eines Bildschirms dem Benutzer 1 angezeigt.

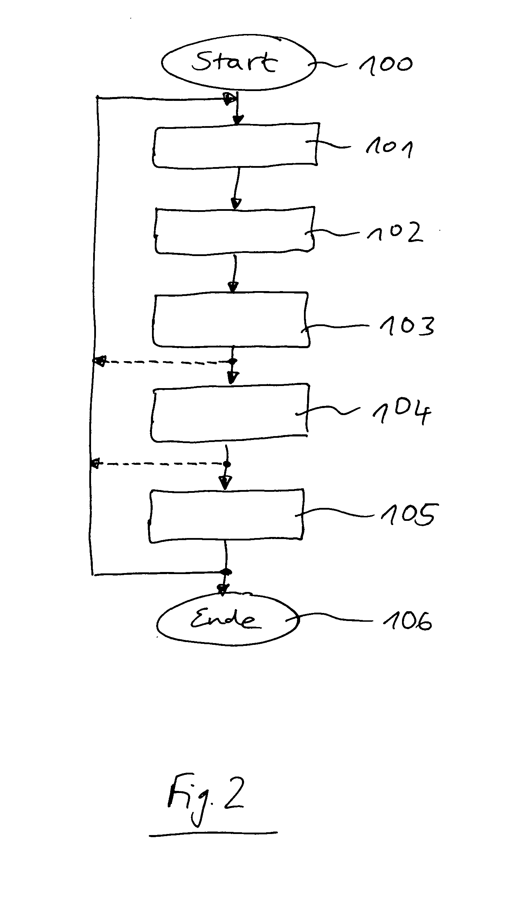

Die Funktionsweise des erfindungsgemäßen Client-Server-Systems bei der Durchführung des erfindungsgemäßen Verfahrens ist beispielhaft in Figur 2 schematisch dargestellt.

Das Verfahren startet in einem Schritt 100. In einem Schritt 101 fordert der Benutzer 1 mittels des Client 2 (beispielsweise durch Eingabe einer URL in ein in dem Browser dafür vorgesehenes Texteingabefeld) eine Netzwerkseite von einem dem Online-Shop 9 zugeordneten Werbepartner 5, 6 an. Ein derartiger Werbepartner 5, 6 kann beispielsweise ein sogenanntes Shopping-Portal sein, das eine Mehrzahl von Links zu verschiedenen Online-Shops 9 zur Verfügung stellt. Der Benutzer 1 gibt auf einer Startseite des Shopping-Portals eines oder mehrere Schlüsselworte (z.B. betreffend die Branche, den Sitz, etc. eines gesuchten Online-Shops) ein und aus der Mehrzahl von in dem Portal verfügbaren Links zu verschiedenen Online-Shops 9 werden geeignete Online-Shops ausgewählt. Die Links zu den ausgewählten Online-Shops werden dem Benutzer 1 angezeigt.

Ein Werbepartner 5, 6 kann im weitesten Sinne jeder Anbieter sein, der mittels eines dem Anbieter zugeordneten Servers 5', 6' eine Netzwerkseite zum Abruf durch einen Client 2 zur Verfügung stellt, wobei die Netzwerkseite einen Link zu einem Online-Shop 9 aufweist. Anbieter derartiger Netzwerkseiten sind beispielsweise kommerzielle Anbieter von Informationen. Anbieter derartiger Netzwerkseiten sind häufig aber auch Privatpersonen, die durch das Darstellen von Links zu Online-Shops 9 auf einer oder mehrerer der von diesen angebotenen Netzwerkseiten einen finanziellen Gewinn erzielen wollen oder die dadurch erreichen, dass das Zurverfügungstellen ihrer Netzwerkseiten im Internet für den Benutzer kostenfrei ist.

Die angeforderte Netzwerkseite enthält mindestens einen Link zu dem Online-Shop 9, bspw. in Form eines Werbebanners. In einem Schritt 102 wird aus einer Mehrzahl von abgespeicherten Benutzerprofilen das Profil des Benutzers 1 ausgewählt, in Abhängigkeit dessen aus einer Mehrzahl von Links ein geeigneter Link ausgewählt und in die von dem Benutzer 1 angeforderte Netzwerkseite integriert, bevor sie an den Client 2 übermittelt wird. Alternativ können auch der Inhalt der Netzwerkseite und der Link separat zu dem Client 2 übermittelt und dort zu der fertigen Netzwerkseite zusammengesetzt werden. Zu diesem Zweck wird die Identität des Benutzers 1 erkannt und aus einer Mehrzahl von Benutzerprofilen, die bspw. in der Datenbank 11 des Servers 10 abgespeichert sind, ein entsprechendes Profil ermittelt. Die Identität des Benutzers 1 kann bspw. dadurch ermittelt werden, dass der Client 2 entweder automatisch oder veranlasst durch den Benutzer 1 oder eine andere Komponente des Client-Server-Systems eine eindeutige Kennung des Benutzers 1 bzw. des Client 2 aussendet, bspw. in Form eines Cookies, das in dem Speicherbereich 3 des Client 2 abgespeichert ist.

Es ist auch denkbar, dass der Werbepartner 5, 6 nach Aufruf der angeforderten Netzwerkseite durch den Benutzer 1 durch die Eingabe eines Schlüsselwortes eine entsprechende Information an das Tracking-System 7, 8 übermittelt, welche Angaben über den Benutzer, das Schlüsselwort und evtl. noch andere Informationen enthält. Das Tracking-System 7, 8 ermittelt dann in Abhängigkeit von den Angaben aus der Mehrzahl von Benutzerprofilen das des Benutzers 1 und aus der Mehrzahl der Links einen entsprechenden passenden Link aus. Dieser wird dann wieder an den Werbepartner 5, 6 übermittelt und in die von dem Client 2 angeforderte Netzwerkseite integriert. Die fertige Netzwerkseite wird an den Client 2 übermittelt und dem Benutzer 1 über den Monitor ausgegeben.

In Abhängigkeit des ermittelten Benutzerprofils wird dann aus einer Mehrzahl von Links ein geeigneter Link ausgewählt und in die Netzwerkseite integriert. Die Mehrzahl der Links sind vorzugsweise in einem Speicherbereich der Werbepartner 5, 6 abgespeichert, können aber auch in der Datenbank 11 des Servers 10 abgelegt sein. Die Auswahl des geeigneten Links in Abhängigkeit des ermittelten Benutzerprofils kann bspw. in den Werbepartnern 5, 6 oder in dem Server 10 erfolgen. Dazu ist in dem Werbepartner 5, 6 bzw. in dem Server 10 ein geeignetes Computerprogramm (z. B. ein perl-script) abgelegt, welches durch den Aufruf der gewünschten Netzwerkseite des Werbepartners 5, 6 durch den Client 2 gestartet wird.

In das Benutzerprofil können auch Parameter betreffend das Kaufverhalten der Benutzer einfließen. Diese Parameter umfassen bspw. Angaben über die Häufigkeit von Bestellungen in Online-Shops, die Preisregion der bestellten Produkte, Art der bestellten Produkte (Luxusgüter, Gebrauchsartikel, Lebensmittel, etc.), die Jahreszeit, den Monat, Art des Tages (Feiertag oder Werktag), die Tageszeit, die Uhrzeit, und das Wetter am Ort des Benutzers zum Zeitpunkt der Bestellung. Das Kaufverhalten kann nicht nur auf einen Online-Shop 9 bezogen ermittelt werden, sondern wird vorzugsweise Shop-übergreifend und über einen längeren Zeitraum hinweg ermittelt. Es ist sogar denkbar, dass dem Benutzer 1 bei der Eingabe des Suchwortes "Staubsaugerbeutel" ein Link betreffend Staubsaugerbeutel angezeigt wird, die für einen Staubsauger passen, den er in einem Online-Shop 9 vor einiger Zeit bestellt hat.

Zusätzlich kann der Link auch noch in Abhängigkeit anderer Parameter ausgewählt und in die Netzwerkseite integriert werden. Derartige Parameter können bspw. das auf der Netzwerkseite des Werbepartners 5, 6 eingegebene Schlüsselwort oder aktuelle Informationen hinsichtlich Wetter, Jahreszeit, Monat, Art des Tages (Feiertag, Werktag), Einwahlpunkt des Benutzers 1 ins Internet 4, etc. sein.

Der Werbepartner 5, 6 veranlasst dann in einem Schritt 103, dass die von dem Benutzer 1 mittels des Client 2 angeforderte Netzwerkseite, in die der ausgewählte Link integriert wurde, an den Client 2 übermittelt und mittels des Browsers auf dem Bildschirm dargestellt wird. Selbstverständlich ist es möglich, dass der Benutzer 1 mittels des Client 2 mehrere andere Netzwerkseiten und/oder dieselbe Netzwerkseite mehrfach von dem Werbepartner 5, 6 angefordert und beispielsweise den dargestellten Inhalt gelesen hat, ohne den Link zu aktivieren. Dieser Fall ist durch die gestrichelte Linie dargestellt, welche vom Ende des Schritts 103 wieder zum Anfang des Schritts 101 führt und so lange wiederholt wird, bis der Benutzer 1 den Link aktiviert oder das Verfahren abgebrochen wird.

In einem Schritt 104 aktiviert der Benutzer 1 dann den auf der angeforderten Netzwerkseite dargestellten Link zu dem Online-Shop 9 bzw. zu dem gesuchten Produkt. Die Aktivierung dieses Links veranlasst zunächst die Übermittlung einer Netzwerkseite, auf die der Link verweist und die einen Online-Shop 9 oder ein Produkt betrifft, an den Client 2 und die Ausgabe des Inhalts der Netzwerkseite mittels eines Browsers auf dem Monitor des Clients 2. Diese Netzwerkseite ist beispielsweise die home-page des Online-Shop 9 oder eine Netzwerkseite, die eine Beschreibung eines Produkts enthält. Sie ist entweder eine reine Werbeseite oder sie eröffnet die Möglichkeit, mindestens ein Produkt gleich online zu bestellen. Selbstverständlich ist es möglich, dass der Benutzer 1 auf der dem Online-Shop 9 bzw. dem Produkt zugeordneten Netzwerkseiten keine Bestellung ausführt und beispielsweise nur den dargestellten Inhalt liest, ohne das Produkt zu bestellen. Dieser Fall ist durch die gestrichelte Linie dargestellt, welche vom Ende des Schritts 104 wieder zum Anfang des Schritts 101 führt und so lange wiederholt wird, bis der Benutzer 1 ein Produkt kauft oder das Verfahren abgebrochen wird.

Zusätzlich kann der Werbepartner 5, 6 (beispielsweise mittels eines auf dem Server 5', 6' des Werbepartners 5, 6 abgelegten perl-scripts, das durch die Aktivierung des Links gestartet wird) veranlassen, bei dem Client 2 ein Cookie zu setzen. Dabei sendet der Werbepartner 5, 6 Informationen betreffend die Aktivierung des Links an den Client 2 und veranlasst, dass der Client 2 diese Informationen in Form des Cookies beispielsweise in dem Speicherbereich 3 abspeichert. Dieses Cookie kann die Uhrzeit, das Datum, eine Identifizierung der Netzwerkseite und/oder eine Identifizierung des Links (also beispielsweise des Werbebanners, der auf der Netzwerkseite dargestellt ist) beinhalten. Dieses bei dem Client 2 abgespeicherte Cookie wird im folgenden als Werbepartner-Cookie bezeichnet.

Allerdings ist es auch denkbar, dass das Setzen des Cookies mit den Informationen betreffen die Aktivierung des Links durch den Server 10 veranlasst wird. Dabei kann durch die Aktivierung des Links durch den Benutzer 1 der Server 10 zur Ausführung eines Computerprogramms veranlasst werden. Auch dieses Computerprogramm kann in Form eines Scripts, beispielsweise als perl-script vorliegen, das durch die Eingabe und das Absenden einer URL durch den Client 2 gestartet wird. Durch die Ausführung dieses Computerprogramms veranlasst der Server 10, dass auf dem Client 9 das Cookie gesetzt wird, das im folgenden als Server-Cookie bezeichnet wird. Das Server-Cookie beinhaltet beispielsweise Informationen, die eine Identifizierung des Werbepartners 5, 6, eine Identifizierung des aktivierten Links, eine Uhrzeit, und/oder ein Datum umfassen. Das Server-Cookie kann insbesondere auch eine besonders niedrige Vertraulichkeitsstufe dadurch haben, dass nur besonders wenig vertrauliche Informationen in dem Server-Cookie abgespeichert werden. Damit ist es beispielsweise möglich, ein Server-Cookie auch dann bei dem Client 2 zu setzen, wenn ein auf dem Client 2 ablaufender Browser eine hohe Sicherheitsstufe eingestellt hat und demzufolge nur das Setzen von Cookies mit einer besonders niedrigen Vertraulichkeitsstufe zulässt. Darin, dass es mit dem erfindungsgemäßen Verfahren möglich ist, zwischen dem Client 2 und dem Server 10 nur Cookies sehr geringer Vertrauensstufe auszutauschen, ist eine Durchführbarkeit dieses Verfahrens auch dann möglich, wenn bei dem Browser des Client 2 eine besonders hohe Sicherheitsstufe einstellt ist, das heißt Cookies mit hoher Vertrauensstufe können bei dem Client 2 nicht abgespeichert werden bzw. nicht von dem Client 2 an einen anfordernden Server übermittelt werden.

Es ist ferner möglich, dass der Server 10 Informationen bezüglich der Aktivierung des Links in einem dem Server 10 zugeordneten Speicherbereich, beispielsweise der Datenbank 11, abspeichert. Diese Informationen können eine oder mehrere der oben genannten Informationen enthalten, die auch in dem Server-Cookie abgespeichert sein können. In der Datenbank 11 können auch weitere Informationen, wie beispielsweise eine Identifizierung des Client 2, abgespeichert werden. Insbesondere ist es vorstellbar, dass die Informationen in der Datenbank 11 derart abgespeichert werden, dass eine Zuordnung zu dem Server-Cookie möglich ist.

Ist dem Client 5, 6 ein Tracking-System 7, 8 zugeordnet, so können Informationen bezüglich des Tracking-Systems 7, 8 in dem Server-Cookie und/oder in der Datenbank 11 abgelegt werden. Ferner kann veranlasst werden, dass ein auf dem Tracking-System 7, 8 abgespeichertes Computerprogramm ausgeführt wird. Auch dieses Computerprogramm kann als perl-script ausgeführt sein, das durch Anforderung einer diesem perl-script zugeordneten URL ausgeführt wird. Die Ausführung des Computerprogramms auf dem Tracking-System 7, 8 kann wiederum das Setzen eines Cookies bei dem Client 2 zur Folge haben. Ein derartiges Cookie wird im folgenden als Tracking-System-Cookie bezeichnet.

Die in dem Tracking-System-Cookie abgespeicherten Informationen können Informationen bezüglich einer Identifizierung des Werbepartners 5, 6, einer Identifizierung des aktivierten Links, einer Uhrzeit, und/oder eines Datums enthalten. Das Tracking-System 7, 8 kann ferner vorsehen, dass weitere Informationen in einem dem Tracking-System 7, 8 zugeordneten Speicherbereich abgelegt werden. Insbesondere kann vorgesehen sein, dass diese Informationen derart abgespeichert werden, dass eine Zuordnung zu dem bei dem Client 2 abgelegten Tracking-System-Cookie möglich ist.

Eine Erkennung, ob einem Werbepartner 5, 6 ein Tracking-System 7, 8 zugeordnet ist, kann beispielsweise durch die Information erfolgen, die einem auf der Netzwerkseite des Werbepartners 5, 6 dargestellten Link zugeordnet ist. Im einfachsten Fall weist dieser Link eine URL zu dem bei dem Tracking-System 7, 8 abgespeicherten Computerprogramm auf, das bei Aktivierung des Links ausgeführt wird. Vorstellbar ist es auch, dass der Server 10 zumindest für den Online-Shop 9 in einem dem Server 10 zugeordneten Speicherbereich, beispielsweise der Datenbank 11, für jeden Werbepartner 5, 6, der einem Tracking-System 7, 8 zugeordnet ist, Informationen bezüglich dieser Zuordnung bereithält und diese Informationen bei der Ausführung des durch die URL auf dem Server 10 gestarteten Computerprogramms auswertet. Selbstverständlich sind eine Vielzahl weiterer Möglichkeiten vorstellbar um zu Erkennen, ob und welchem Tracking-System 7, 8 ein Werbepartner 5, 6 zugeordnet ist.

In einem Schritt 105 wird schließlich über die durch Aktivieren des Links angeforderte Netzwerkseite des Online-Shops 9 das Produkt bestellt. Dazu wird bspw. ein Bestellformular ausgefüllt und an den Online-Shop 9 gesandt. Denkbar wäre aber auch, dass die Bestellung über eine auf der Netzwerkseite dargestellte Telefonnummer oder Postanschrift des Online-Shops 9 oder auf andere Weise offline erfolgt.

Falls dem Online-Shop 9 ein Tracking-System zugeordnet ist, erhält dieses Informationen über die erfolgte Bestellung. Dazu geht die Bestellung über das Tracking-System 7, 8 an den Online-Shop 9 oder aber das Tracking-System 7, 8 erhält von dem Online-Shop 9 eine entsprechende Information betreffend die Bestellung. Es ist vorstellbar, dass auch bei dem Online-Shop 9 ein Computerprogramm gestartet wird, das beispielsweise das Setzen eines Cookies bei dem Client 2 veranlasst. Ein derartiges Cookie wird im folgenden als Online-Shop-Cookie bezeichnet.

Nach erfolgter Bestellung des Produkts kann wieder zum Anfang des Verfahrens verzweigt werden, wobei dann die Schritte 101 bis 105 so lange durchlaufen werden, bis das Verfahren beendet wird. Das Ende des Verfahrens ist in Schritt 106 erreicht.

In einem weiteren Ausführungsbeispiel ist es möglich, dass der Online-Shop 9 einen Zugriff auf Teile der bei dem Server 10 abgespeicherten Informationen hat. Dazu könnte ein Zugriff des Online-Shops 9 auf die Datenbank 11 vorgesehen sein. Dies ermöglicht es dem Online-Shop 9, Informationen bei dem Server 10 abzulegen. Derartige Informationen sind beispielsweise eine Liste aller dem Online-Shop 9 zugeordneten Werbepartner 5, 6, eine Liste aller Tracking-Systeme 7, 8, ein Auswahlkriterium bzw. mehrere Auswahlkriterien und/oder URLs zu den Werbepartnern 5, 6, den Tracking-Systemen 7, 8 und insbesondere zu eventuell bei den Werbepartnern 5, 6 und den Tracking-Systemen 7, 8 abgelegten Computerprogrammen, die von dem Server in Abhängigkeit von ebenfalls in der Datenbank 11 vorgegebenen Ereignissen ausgeführt werden sollen.

Mittels eines derartigen Zugriffs auf Teile der bei dem Server 10 abgespeicherten Informationen kann der Online-Shop 9 aber auch Informationen erhalten, um beispielsweise Statistiken über die Häufigkeit der Aktivierung bestimmter Links anzufertigen. Es ist vorstellbar, dass der Server 10 als ein Software-Modul realisiert ist. In diesem Fall ist es insbesondere vorstellbar, dass der Server 10 auf einem dem Online-Shop 9 zugeordneten Rechengerät bzw. dem Online-Shop 9 selbst abläuft. Selbstverständlich könnte der Server 10 auch in einem der Werbepartner 5, 6 oder in einem der Tracking-Systeme 7, 8 realisiert sein.

Folgende Beispiele seien erwähnt: Ein Benutzer 1 ruft die home-page einer Suchmaschine 5, 6 durch die Eingabe einer entsprechenden URL (z. B. http://www.google.de, http://search.msn.de oder http://www.overture.de) in den Browser auf dem Client 2 auf. Als Suchwort gibt der "Badehose" ein und startet eine entsprechende Suche nach Netzwerkseiten, die dieses Suchwort betreffen bzw. dieses Suchwort enthalten. Die Suchmaschine 5, 6 ermittelt auf an sich bekannte Weise eine Liste mit Verweisen auf die gefundenen relevanten Netzwerkseiten. Diese Liste wird dem Benutzer in Form einer dynamisch generierten Netzwerkseite präsentiert. Zusätzlich sind auf der Netzwerkseite Werbebanner vorgesehen, die in Abhängigkeit von einem Profil des Benutzers 1 ausgewählt und in die Netzwerkseite integriert werden. Zusätzlich zu dem Benutzerprofil können auch aktuelle Parameter (z.B. das Wetter, die Jahreszeit, etc.) in die Auswahl des Links einfließen. Ebenso kann das bisherige Kaufverhalten des Benutzers 1 in die Auswahl einfließen. Informationen über das Kaufverhalten können von dem Tracking-System 7, 8 zur Verfügung gestellt werden.

Bei dem genannten Beispiel wird bspw. einem jungen männlichen Benutzer 1 im Sommer ein Link betreffend Badehosen präsentiert, wohingegen ihm im Winter ein Link zu Badeorten bzw. Reisen in wärmere Regionen angezeigt werden. Einem älteren Benutzer 1 werden im Sommer keine Links zu Badehosen, sondern eher zu Bademänteln oder zu Strandtüchern angeboten. Im Winter könnten ihm Links zu Kurorten bzw. Reisen in Kurorte angezeigt werden.

## Patentansprüche

1. Verfahren zum Bestellen eines Produkts bei einem mit einem Kommunikationsnetzwerk (4) verbundenen Online-Shop (9), dem eine mindestens einen Werbepartner (5, 6) umfassende, mit dem Kommunikationsnetzwerk (4) verbundene Menge von Werbepartnern (5, 6) zugeordnet ist, wobei
a) mittels eines einem Benutzer (1) zugeordneten Client (2) durch Eingabe eines Schlüsselwortes eine von einem dem Online-Shop (9) zugeordneten Werbepartner (5, 6) bereitgestellte Netzwerkseite über das Kommunikationsnetzwerk (4) angefordert wird;
b) die angeforderte Netzwerkseite an den Client (2) übermittelt wird und dem Benutzer (1) angezeigt wird;
c) der Benutzer (1) einen auf der angezeigten Netzwerkseite in Abhängigkeit von dem eingegebenen Schlüsselwort dargestellten und dem Online-Shop (9) bzw. dem Produkt zugeordneten Link aktiviert;
d) durch Aktivieren des Links automatisch eine dem Online-Shop (9) bzw. dem Produkt zugeordnete Netzwerkseite durch den Client (2) angefordert wird;
e) die angeforderte Netzwerkseite an den Client (2) übermittelt wird und dem Benutzer (1) angezeigt wird; und
f) der Benutzer (1) auf der angezeigten Netzwerkseite das Produkt bestellt oder die Schritte a) bis e) so lange wiederholt werden, bis der Benutzer (1) das Produkt auf der angezeigten Netzwerkseite bestellt,
**dadurch gekennzeichnet, dass** der dem Online-Shop (9) bzw. dem Produkt zugeordnete Link in Abhängigkeit von einem dem Benutzer (1) bzw. dem Client (2) zugeordneten Benutzerprofil auf der angezeigten Netzwerkseite dargestellt wird.

2. Verfahren nach Anspruch 1, **dadurch gekennzeichnet, dass** auf einem mit dem Kommunikationsnetzwerk (4) verbundenen Server eine Vielzahl von Benutzerprofilen und diesen zugeordnete Links abgelegt sind, aus denen in Abhängigkeit von dem Benutzerprofil des Benutzers (1) bzw. des Clients (2) ein Link ausgewählt wird und auf der angezeigten Netzwerkseite dargestellt wird.

3. Verfahren nach Anspruch 2, **dadurch gekennzeichnet, dass** der Server Teil eines eMail-Dienstes oder eines sonstigen Dienstes mit Nutzerprofilen ist, wobei der Werbepartner (5, 6) über das Kommunikationssystem (4) Zugriff auf den Server hat.

4. Verfahren nach Anspruch 2, **dadurch gekennzeichnet, dass** der Server Teil des Werbepartners (5, 6) ist.

5. Verfahren nach einem der Ansprüche 2 bis 4, **dadurch gekennzeichnet, dass** die Auswahl des Links in Abhängigkeit von dem Benutzerprofil des Benutzers (1) bzw. des Clients (2) durch den Werbepartner (5, 6) erfolgt.

6. Verfahren nach Anspruch 2 oder 3, **dadurch gekennzeichnet, dass** der Werbepartner (5, 6) das Benutzerprofil des Benutzers (1) bzw. des Clients (2) an den Server übermittelt, die Auswahl des Links in Abhängigkeit von den Benutzerprofilen des Benutzers (1) bzw. des Clients (2) durch den Server erfolgt, und der Server den ausgewählten Link bzw. einen Verweis auf den ausgewählten Link an den Werbepartner (5, 6) übermittelt.

7. Verfahren nach einem der Ansprüche 1 bis 6, **dadurch gekennzeichnet, dass** mindestens ein Tracking-System (7, 8) mindestens einem der Werbepartner (5, 6) zugeordnet und mit dem Kommunikationsnetzwerk (4) verbunden ist, wobei das Tracking-System (7, 8) über einen vorgebbaren Zeitraum hinweg die ausgewählten Links vergleicht mit der Anzahl der Aktivierungen des Links und/oder mit der Anzahl der bei dem Online-Shop (9) bestellten Produkte.

8. Verfahren nach Anspruch 7, **dadurch gekennzeichnet, dass** das Tracking-System (7, 8) in Abhängigkeit von dem Ergebnis des Vergleichs eine Optimierung der Links hin zu einer höheren Effektivität der Links ausführt.

9. Verfahren nach Anspruch 8, **dadurch gekennzeichnet, dass** im Rahmen der Optimierung der Links die Zuordnung der Links zu den Schlüsselworten, zu den Benutzerprofilen und/oder zu den Werbepartnern (5, 6) geändert wird.

10. Verfahren nach einem der Ansprüche 7 bis 9, **dadurch gekennzeichnet, dass** bei der Aktivierung des Links automatisch mindestens eine erste Information bezüglich der Aktivierung des Links von dem Client (2) an das Tracking-System (7, 8) übermittelt wird, und der Online-Shop (9) bei der Bestellung des Produkts den Client (2) automatisch veranlasst, eine weitere Information an das Tracking-System (7, 8) zu übermitteln.

11. Verfahren nach einem der Ansprüche 1 bis 10, **dadurch gekennzeichnet, dass** dem Werbepartner (5, 6) eine Suchmaschine zugeordnet ist, wobei der Benutzer (1) das Schlüsselwort in Form eines Suchwortes für die Suchmaschine eingibt, die Suchmaschine in dem Kommunikationsnetzwerk (4) nach Netzwerkseiten sucht, welche das Suchwort enthalten oder betreffen, und dem Benutzer die angeforderte Netzwerkseite mit einer Liste mit gefundenen Netzwerkseiten bzw. mit entsprechenden Verknüpfungen auf die gefundenen Netzwerkseiten angezeigt wird, auf der auch der Link dargestellt wird.

12. Verfahren nach Anspruch 11, **dadurch gekennzeichnet, dass** das Benutzerprofil eines Benutzers (1) in Abhängigkeit der von ihm über einen vorgebbaren Zeitraum hinweg eingegebenen Suchworte automatisch ermittelt wird.

13. Verfahren nach Anspruch 11 oder 12, **dadurch gekennzeichnet, dass** das Benutzerprofil eines Benutzers (1) in Abhängigkeit von den Einträgen in einer Favoritenliste eines auf dem Client (2) ablaufenden Browsers automatisch ermittelt wird.

14. Verfahren nach einem der Ansprüche 1 bis 13, **dadurch gekennzeichnet, dass** das Benutzerprofil des Benutzers (1) eine oder mehrere der nachfolgenden Angaben umfasst: Geschlecht, Alter, Geburtsort, Wohnort, Familienstand, Anzahl der Kinder, Ausbildung, Beruf, Einkommen, Hobbys, und Neigungen.

15. Client-Server-System umfassend einen einem Benutzer (1) zugeordneten Client (2), einen Online-Shop (9), dem mindestens ein Produkt zugeordnet ist, eine mindestens einen Werbepartner (5, 6) umfassende Menge von dem Online-Shop (9) zugeordneten Werbepartnern, und ein Kommunikationsnetzwerk (4), mittels dessen eine Kommunikation zwischen dem Client (2), dem Werbepartner (5, 6), und dem Online-Shop (9) möglich ist, wobei
- der Client (2) Mittel zur Eingabe eines Schlüsselwortes und damit zum Anfordern einer von einem dem Online-Shop (9) zugeordneten Werbepartner (5, 6) bereitgestellten Netzwerkseite über das Kommunikationsnetzwerk (4) aufweist;
- in dem Client-Server-Netzwerk Mittel zum Übermitteln der angeforderten Netzwerkseite an den Client (2) und in dem Client (2) ein Browser zur Anzeige der Netzwerkseite vorgesehen sind;
- in dem Client-Server-Netzwerk Mittel zum Darstellen eines dem Online-Shop (9) bzw. dem Produkt zugeordneten Links auf der angezeigten Netzwerkseite in Abhängigkeit von dem eingegebenen Schlüsselwort;
- der Client (2) Mittel zum Aktivieren des Links und damit zum automatischen Anfordern einer dem Online-Shop (9) bzw. dem Produkt zugeordneten Netzwerkseite aufweist;
- in dem Client-Server-Netzwerk Mittel zum Übermitteln der angeforderten Netzwerkseite an den Client (2) und in dem Client (2) der Browser zur Anzeige der Netzwerkseite vorgesehen sind; und
- der Client (2) Mittel zum interaktiven Bestellen des Produkts über das Kommunikationsnetzwerk (4) aufweist,
**dadurch gekennzeichnet, dass** in dem Client-Server-System Mittel zur Auswahl des dem Online-Shop (9) bzw. dem Produkt zugeordneten Links in Abhängigkeit von einem dem Benutzer (1) bzw. dem Client (2) zugeordneten Benutzerprofil und zur Darstellung des ausgewählten Links auf der angezeigten Netzwerkseite aufweist.

16. Client-Server-System nach Anspruch 15, **dadurch gekennzeichnet, dass** das Client-Server-System Mittel zur Durchführung eines Verfahrens nach einem der Ansprüche 2 bis 14 aufweist.

17. Server (10) eines Client-Server-Systems, das Client-Server-System umfassend mindestens einen einem Benutzer (1) zugeordneten Client (2), einen Online-Shop (9), eine mindestens einen Werbepartner (5, 6) umfassende Menge von dem Online-Shop (9) zugeordneten Werbepartnern (5, 6) und ein Kommunikationsnetzwerk (4), mit dem der Client (2), der Werbepartner (5, 6) und der Online-Shop (9) in Verbindung stehen, **dadurch gekennzeichnet, dass** der Server (10) Mittel zur Durchführung eines Verfahrens nach einem der Ansprüche 1 bis 14 aufweist.

18. Computerprogramm, das auf einem Client-Server-System, insbesondere auf einem Client (2) und/oder auf einem Server ablauffähig ist, **dadurch gekennzeichnet, dass** das Computerprogramm derart programmiert ist, dass ein Verfahren nach einem der Ansprüche 1 bis 14 durchgeführt wird, wenn das Computerprogramm auf dem Client-Server-System ausgeführt wird.

19. Computerprogramm nach Anspruch 18, **dadurch gekennzeichnet, dass** das Computerprogramm auf einem Speicherelement abgespeichert ist.

20. Computerprogramm nach Anspruch 19, **dadurch gekennzeichnet, dass** das Speicherelement als Diskette, Compact Disk (CD), Digital Versatile Disk (DVD), und/oder mindestens ein mindestens einer Komponente des Client-Server-Systems zugeordneter Speicherbereich ausgebildet ist.
